# FASCICULE DE BREVET EUROPEEN

(11) **EP 2 243 972 B1**
(45) Date de publication et mention de la délivrance du brevet: **21.12.2011**
(21) Numéro de dépôt: 10354014.2
(22) Date de dépôt: 24.03.2010
(51) Int. Cl.: F16B 45/00

(54) **Maillon d'attache à bague rotative verrouillable**
Verbindungsglied mit verriegelbarem Drehring
Attachment link with lockable rotatory ring

(30) Priorité: 22.04.2009 FR 0901948
(43) Date de publication de la demande: 27.10.2010
(73) Titulaire: Zedel, 38920 Crolles (FR)
(72) Inventeur: Petzl, Paul, 38530 Barraux (FR); Hédé, Jean-Marc, 38420 Domène (FR)
(74) Mandataire: Hecké, Gérard

(56) Documents cités:
- EP-A- 0 376 860
- US-A- 5 505 013
- US-A1- 2003 209 004

## Description

### Domaine technique de l'invention

L'invention concerne un maillon d'attache comprenant :
- un corps en forme d'anneau ouvert ayant un premier et un deuxième embouts filetés, disposés en regard l'un de l'autre aux extrémités opposées,
- et une bague rotative tubulaire montée à vissage sur le deuxième embout pour fermer ou ouvrir l'espace séparant les deux embouts.

### Etat de la technique

Il existe deux types de dispositifs d'attache utilisant un anneau ouvert pouvant être fermé par un élément mobile de fermeture. Il s'agit des mousquetons et des maillons rapides. Le premier type concerne les mousquetons équipés d'un doigt pivotant sollicité en position de fermeture par un ressort de rappel. Les maillons rapides du deuxième type (voir document US 2003/0209004 A1) comportent une bague de fermeture, laquelle est déplaçable en translation par vissage, soit dans le sens de la fermeture, soit dans le sens inverse d'ouverture.

Les mousquetons connus à verrouillage sont généralement équipés de bagues à vis ou à baïonnette montées coaxialement sur le doigt mobile pivotant (voir document US 5505013 A). Dans le cas des bagues à vis, le passage de la deuxième position déverrouillée vers la première position verrouillée impose un vissage de plusieurs tours de la bague pour la déplacer en translation le long du doigt pendant une course de quelques millimètres de manière à recouvrir efficacement l'élément de retenue du corps. Cette opération de vissage nécessite un temps de manoeuvre relativement long. Le même inconvénient subsiste lors du dévissage pour le passage de la bague de la première position verrouillée vers la deuxième position déverrouillée. Dans le cas d'une bague à baïonnette, le blocage du doigt en position fermée s'opère par un premier déplacement en translation de la bague vers le haut à l'encontre de la force d'un ressort, suivi d'un deuxième déplacement en rotation limitée. Après relâchement, la bague est soumise à un léger mouvement de recul, et est maintenue dans la première position de blocage par la force élastique du ressort. Un déverrouillage intempestif de la bague reste néanmoins possible en présence de forces de friction exercées par la corde.

Le document EP 826890 A1 décrit un mousqueton à bague de verrouillage, laquelle est montée à rotation autour du doigt pivotant. Un verrou à bille est solidaire du doigt, et coopère avec la bague rotative pour assurer le verrouillage positif du mousqueton en position fermée lorsque la bague est actionnée en fin de course. Le déplacement manuel en rotation de la bague de la première position verrouillée vers la deuxième position déverrouillée ne peut intervenir qu'après neutralisation préalable du verrou. L'ouverture du doigt d'un mousqueton verrouillé nécessite donc une première commande de déclenchement du verrou, un deuxième mouvement de rotation de la bague vers la deuxième position déverrouillée, et un troisième mouvement de pivotement du doigt vers la position d'ouverture. Le deuxième mouvement de rotation pour le déverrouillage de la bague rallonge la séquence d'ouverture, et complique la manipulation du mousqueton.

Il existe également des mousquetons ayant une bague de verrouillage automatique du doigt lorsque ce dernier arrive en position de fermeture sous l'action d'un ressort de rappel. La bague peut être rotative ou coulissante, et reste en position déverrouillée aussi longtemps que le doigt est ouvert. Elle revient automatiquement en position verrouillée en fin de course de fermeture du doigt. Lors du déplacement de la bague entre la position déverrouillée et la position verrouillée, on a constaté que les forces de frottement de la bague pouvaient entraver la fermeture complète du doigt, au détriment de la sécurité.

Les documents DE 4237263 A1 et GB 2077838 A se rapportent à des mousquetons équipé chacun d'un verrou commandé et sollicité directement par un ressort pour bloquer le doigt en position fermée. Selon le document DE 4237263 A1, le verrou est intégré à l'intérieur du doigt, et son déverrouillage pour l'ouverture du mousqueton nécessite un effort important.

Dans les maillons rapides du deuxième type, la bague à vis doit être actionnée en rotation pendant toute la course en translation lors de la fermeture ou de l'ouverture. Pour garantir la tenue mécanique du maillon, il est nécessaire de visser la bague à fond pour éviter toute possibilité de dévissage ou de rupture sous l'action d'un effort important.

### Objet de l'invention

L'objet de l'invention consiste à réaliser un maillon d'attache du deuxième type, ayant une tenue mécanique élevée, et conférant une sécurité optimale pour l'utilisateur.

Le maillon selon l'invention est caractérisé en ce que :
- un verrou est logé dans une encoche du corps à l'arrière du premier embout fileté, en étant sollicité vers la position de verrouillage par un ressort,
- le bout périphérique de la bague comporte une entaille dans laquelle s'engage automatiquement le verrou en fin de course de vissage, le déverrouillage s'effectuant par une action manuelle de libération du verrou autorisant le dévissage de la bague rotative vers la position d'ouverture.

L'insertion du verrou dans l'entaille de la bague signale à l'utilisateur que le maillon est verrouillé positivement en position de fermeture. Tout dévissage de la bague est impossible aussi longtemps que le verrou reste bloqué en position verrouillée.

Selon un mode de réalisation préférentiel, une embase en forme de coin permet un mouvement de pivotement du verrou vers la position de déverrouillage.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 est une vue schématique en perspective du maillon selon l'invention, la bague rotative étant représentée en position d'ouverture ;
- la figure 2 montre une vue en coupe de la figure 1 ;
- les figures 3 et 4 sont des vues identiques des figures 1 et 2, au cours du vissage de la bague vers la position de fermeture ;
- les figures 5 et 6 sont des vues identiques des figures 3 et 4, lors de la venue en contact de la bague contre le verrou, mais avant le verrouillage et avant la compression du ressort;
- les figures 7 et 8 sont des vues identiques des figures 5 et 6, lors du pivotement du verrou après compression du ressort ;
- les figures 9 et 10 sont des vues identiques des figures 7 et 8, dans l'état de verrouillage de la bague ;
- les figures 11 et 12 sont des vues identiques des figures 9 et 10, après déverrouillage du verrou pour le dévissage de la bague.

### Description d'un mode particulier de réalisation

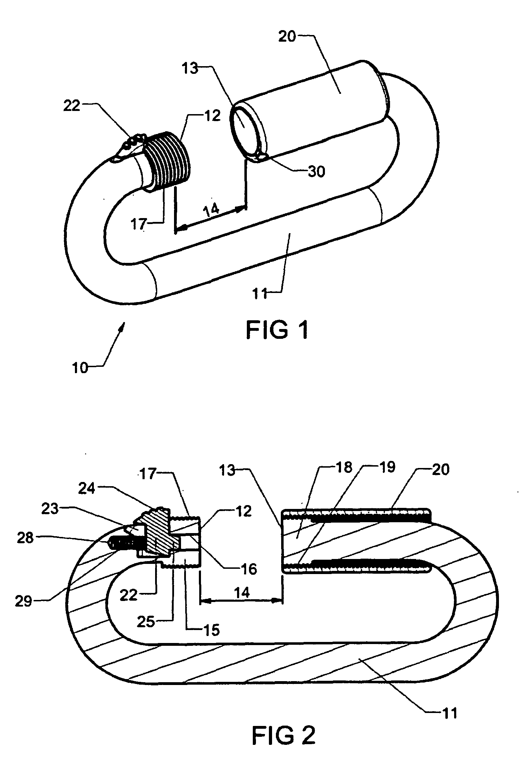

En référence aux figures, un maillon 10 d'attache rapide comporte un corps 11 en forme d'anneau ouvert réalisé à partir d'un barreau métallique incurvé ayany un profil allongé en C, le barreau présentant une section transversale circulaire. Les deux extrémités 12, 13 du corps 11 sont disposées en regard l'une de l'autre, en étant séparées par un espace 14 longitudinal permettant l'introduction d'une corde ou d'une sangle. Dans le cas des figures 1 et 2, l'espace 14 est maximum et correspond à la position d'ouverture.

L'une des extrémités 12 est dotée d'un premier embout 15 tubulaire ayant un alésage 16 interne débouchant de section circulaire, et un premier filetage 17 agencé le long de la surface latérale extérieure. Le diamètre extérieur du premier embout 15 est légèrement supérieur à celui du barreau constituant le corps 11.

L'autre extrémité 13 du corps 11 comporte un deuxième embout 18 muni d'un deuxième filetage 19 externe identique au premier filetage 17. Une bague 20 tubulaire est montée à rotation sur le deuxième embout 18 grâce à un troisième filetage 21 interne coopérant à vissage avec le deuxième filetage 19. La longueur de la bague 20 est calculée pour fermer l'espace 14 en fin de course de vissage, au cours de laquelle le troisième filetage 21 vient se visser sur le premier filetage 17 du premier embout 17. Le troisième filetage 21 interne s'étend sur toute la longueur de la bague 20.

A l'arrière du premier embout 15 se trouve un verrou 22 destiné à verrouiller la bague 20 dans la position de fermeture. Le verrou 22 est logé dans une encoche 23 du corps 11 communiquant avec l'alésage 16 interne du premier embout 15. Le verrou 22 est composé d'un bouton de préhension 24, d'un ergot 25 saillant pénétrant avec jeu dans l'alésage 16, et d'une embase 26 en forme de coin prenant appui sur un épaulement 27 du premier embout 15. Le bouton de préhension 24 peut être coloré.

Un ressort 28 de compression est logé dans un orifice 29 du corps 11, et agit sur le verrou 22 pour le solliciter vers la position de verrouillage. Le ressort 28 est aligné coaxialement avec l'alésage 16 et avec l'ergot 25. Ce dernier reste maintenu dans l'alésage 16 par l'action élastique du ressort 28 lors du mouvement de pivotement du verrou 22 vers la position de déverrouillage.

Le bout périphérique de la bague 20 est pourvu d'une entaille 30 dans laquelle s'insère le verrou 22 dans la position de verrouillage en fin de course de vissage. La largeur de l'entaille 30 est légèrement supérieure à celle du verrou 22, et le ressort 28 rend stable cette position de verrouillage.

Le fonctionnement du maillon 10 d'attache selon l'invention est le suivant :
Dans la position d'ouverture des figures 1 et 2, l'espace 14 séparant l'extrémité 12 de l'extrémité 13 opposée et de la bague 20 mobile, est maximum. Le verrou 22 est poussé par le ressort 28 en appui stable contre le premier embout 15.

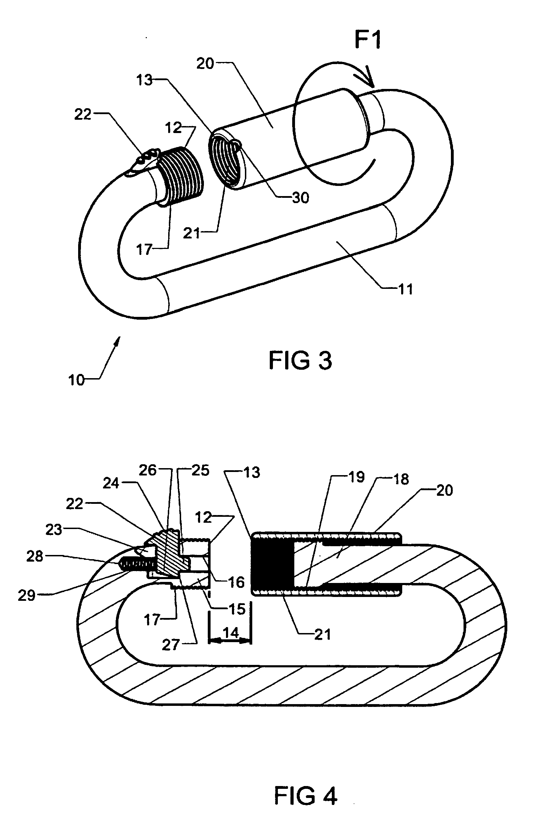

Pour fermer le maillon 10, notamment après avoir introduit une corde ou une sangle à l'intérieur du corps 11, il suffit de tourner manuellement la bague 20 dans le sens de la flèche F (figure 3). L'espace 14 diminue au fur et à mesure du rapprochement de la bague 20 vers l'extrémité 12 du corps 11. Le verrou 22 reste immobile durant la rotation de la bague 20 sur le deuxième embout 18 (figure 4).

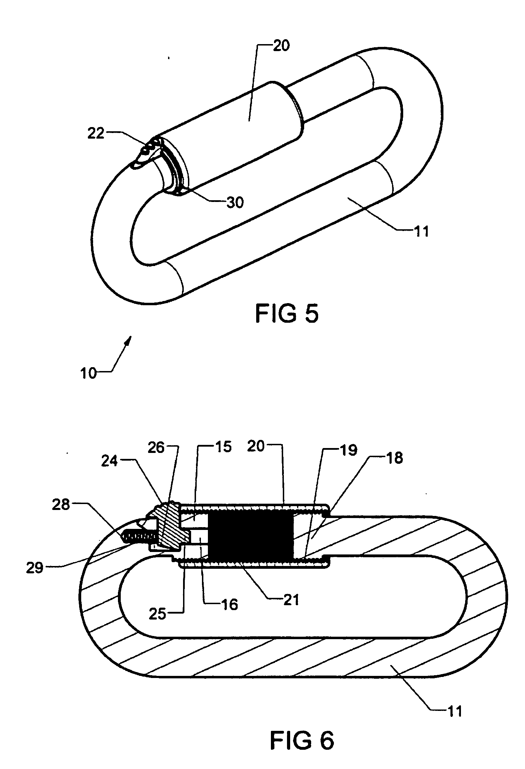

Au cours du mouvement de rotation poursuivi de la bague 20 représenté aux figures 5 et 6, l'avant de la bague 20 vient en contact avec le verrou 22, mais l'entaille 30 de la bague 20 reste décalée angulairement par rapport. Le verrou 22 reste toujours immobile dans la position de la figure 6.

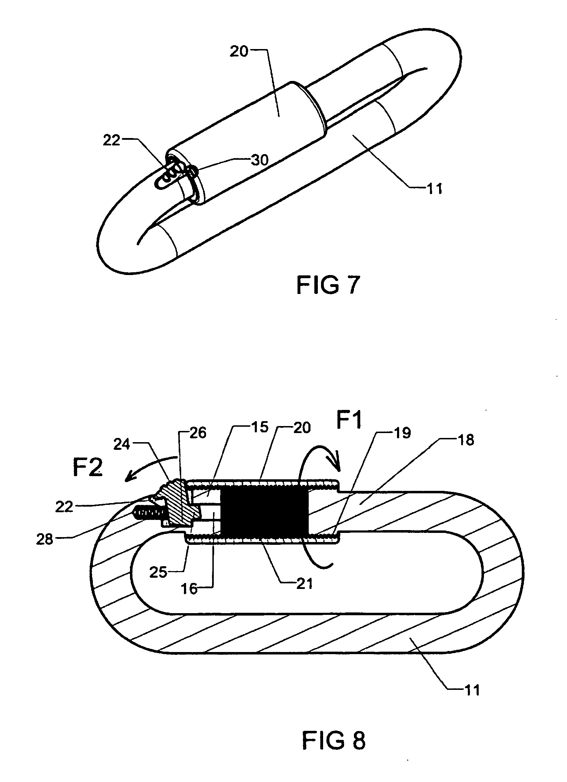

A partir de la position de la figure 6, la rotation poursuivie de la bague 20 selon la flèche F1 provoque un mouvement de pivotement du verrou 22 dans le sens de la flèche F2, à l'encontre de la force élastique du ressort 28 (figures 7 et 8). L'entaille 30 de la bague 20 se rapproche de verrou 22, mais reste toujours décalée angulairement de ce dernier (figure 7). La course de pivotement du verrou 22 dépend de l'angle d'inclinaison de l'embase 26 en coin par rapport au fond de l'encoche 23.

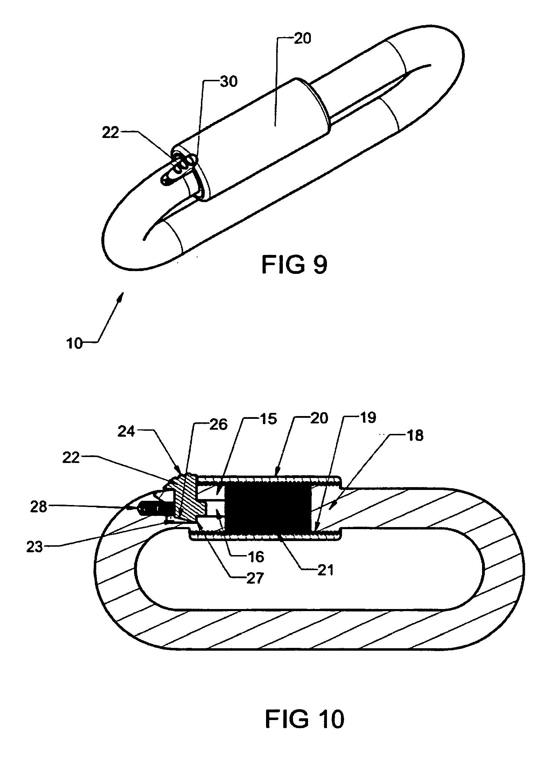

Les figures 9 et 10 montrent la position finale de verrouillage de la bague 20 par le verrou 22 qui pénètre dans l'entaille 30 en fin de course de vissage. Le verrouillage est automatique dès que l'entaille 30 arrive en regard du verrou 22, lequel est poussé par le ressort 28. Le maillon 10 est verrouillé en position de fermeture, et tout dévissage de la bague 20 est impossible sans action manuelle sur le verrou 22.

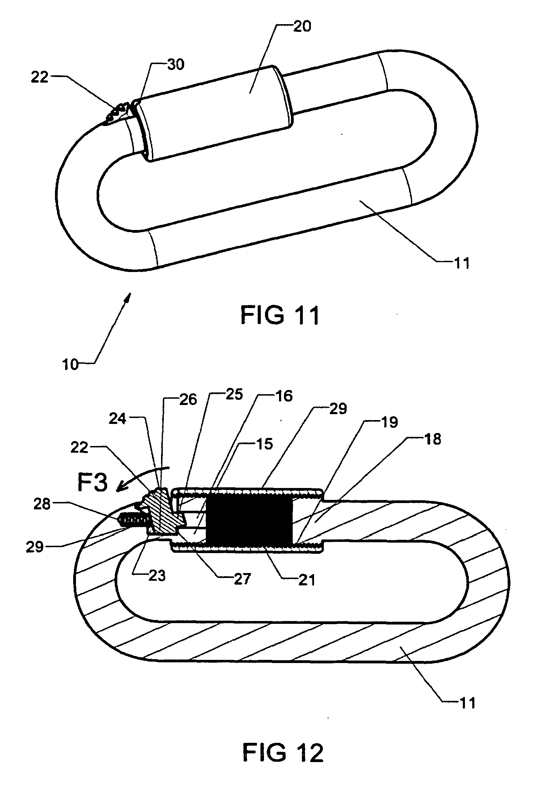

La phase de déverrouillage est illustrée aux figures 11 et 12. Pour ouvrir le maillon 10, il suffit de déplacer le verrou 22 vers la position déverrouillée en le faisant pivoter dans le sens de la flèche F3, à l'encontre de la force de rappel du ressort 28. Le verrou 22 sort de l'entaille 30, et libère la bague 20 qui peut être dévisser et déplacer vers la position ouverte des figures 1 et 2.

On remarque sur la figure 10 ou 12, que la longueur de la bague 20 correspond sensiblement à la somme des longueurs des embouts 15, 18 et de la distance les séparant.

## Revendications

1. Maillon d'attache comprenant :
- un corps (11) en forme d'anneau ouvert ayant un premier et un deuxième embouts (15,18) filetés, disposés en regard l'un de l'autre aux extrémités opposées (12, 13),
- et une bague (20) rotative tubulaire montée à vissage sur le deuxième embout (18) entre une position de fermeture et une position d'ouverture, respectivement pour fermer ou ouvrir l'espace (14) séparant les deux embouts,
**caractérisé en ce que** :
- un verrou (22) est logé dans une encoche (23) du corps (11) à l'arrière du premier embout (15) fileté, en étant sollicité vers la position de verrouillage par un ressort (28),
- le bout périphérique de la bague (20) comporte une entaille (30) dans laquelle s'engage automatiquement le verrou (22) en fin de course de vissage, le déverrouillage s'effectuant par une action manuelle de libération du verrou (22) autorisant le dévissage de la bague (20) rotative vers la position d'ouverture.

2. Maillon d'attache selon la revendication 1, **caractérisé en ce que** le verrou (22) comporte une embase (26) en forme de coin permettant un mouvement de pivotement vers la position de déverrouillage.

3. Maillon d'attache selon la revendication 2, **caractérisé en ce que** le verrou (22) est doté d'un bouton (24) de préhension et d'un ergot (25) destiné à s'engager dans un alésage (16) du premier embout (15).

4. Maillon d'attache selon la revendication 2, **caractérisé en ce que** l'embase (26) du verrou (22) prend appui sur un épaulement (27) du premier embout (15).

5. Maillon d'attache selon la revendication 3, **caractérisé en ce que** le ressort (28) est aligné coaxialement avec l'alésage (16) et avec l'ergot (25).

6. Maillon d'attache selon la revendication 1, **caractérisé en ce que** l'entaille (30) s'étend au bout périphérique de la bague (20), et présente une largeur légèrement supérieure à celle du verrou (22).

7. Maillon d'attache selon la revendication 1, **caractérisé en ce que** la longueur de la bague (20) correspond à la somme des longueurs des embouts (15,18) et de l'espace les séparant.

## Claims

1. An attachment shackle comprising:
- a body (11) in the form of an open ring having threaded first and second end-parts (15,18) arranged facing one another at the opposite ends (12,13),
- and a tubular rotating ferrule (20) fitted with screwing on the second end-part (18) between a closed position and an open position to respectively close or open the space (14) separating the two end-parts,
**characterized in that**:
- a lock (22) is housed in a recess (23) of the body (11) at the rear of the threaded first end-part (15), the lock being biased to the locked position by a spring (28),
- the peripheral end of the ferrule (20) comprises a notch (30) in which the lock (22) engages automatically at the end of screwing travel, unlocking being performed by a manual releasing action of the lock (22) allowing the rotary ferrule (20) to be unscrewed to the open position.

2. Attachment shackle according to claim 1, **characterized in that** the lock (22) comprises a base part (26) in the form of a wedge enabling a pivoting movement to the unlocked position.

3. Attachment shackle according to claim 2, **characterized in that** the lock (22) is provided with a gripping button (24) and with a pin (25) designed to engage in a bore (16) of the first end-part (15).

4. Attachment shackle according to claim 2, **characterized in that** the base part (26) of the lock (22) presses on a rim (27) of the first end-part (15).

5. Attachment shackle according to claim 3, **characterized in that** the spring (28) is coaxially aligned with the bore (16) and with the pin (25).

6. Attachment shackle according to claim 1, **characterized in that** the notch (30) extends at the peripheral end of the ferrule (20) and presents a slightly larger width than that of the lock (22).

7. Attachment shackle according to claim 1, **characterized in that** the length of the ferrule (20) corresponds to the sum of the lengths of end-parts (15, 18) and of the distance separating the latter.

## Patentansprüche

1. Karabinerhaken, der umfasst:
- einen Körper (11) in Form eines offenen Rings, der ein erstes und ein zweites gewindetes Ende (15, 18) hat, die einander gegenüber an den entgegengesetzten Enden (12, 13) angeordnet sind,
- und einen röhrenförmigen Drehring (20), der schraubbar an das zweite Ende (18) zwischen einer Schließ- und einer Öffnungsposition montiert ist, jeweils zum Schließen oder Öffnen des Zwischenraums (14), der die beiden Enden voneinander trennt,
**dadurch gekennzeichnet, dass**:
- ein Schnapper (22) in einer Aussparung (23) des Körpers (11) hinter dem ersten gewindeten Ende (15) angeordnet ist, der von einer Feder (28) in Richtung auf die Verriegelungsposition beansprucht wird,
- das Umfangsende des Rings (20) einen Kerbschnitt (30) umfasst, in den der Schnapper (22) am Ende des Verschraubungsvorgangs automatisch eingreift, wobei die Entriegelung durch ein manuelles Freigeben des Schnappers (22) erfolgt, wodurch das Losschrauben des Drehrings (20) hin zur Öffnungsposition ermöglicht wird.

2. Karabinerhaken nach Anspruch 1, **dadurch gekennzeichnet, dass** der Schnapper (22) einen keilförmigen Sockel (26) aufweist, der eine Schwenkbewegung in Richtung auf die Entriegelungsposition erlaubt.

3. Karabinerhaken nach Anspruch 2, **dadurch gekennzeichnet, dass** der Schnapper (22) einen Greifknopf (24) und einen Nocken (25) aufweist, der in eine Bohrung (16) des ersten Endes (15) eingreifen soll.

4. Karabinerhaken nach Anspruch 2, **dadurch gekennzeichnet, dass** der Sockel (26) des Schnappers (22) an einem Absatz (27) des ersten Endes (15) anliegt.

5. Karabinerhaken nach Anspruch 3, **dadurch gekennzeichnet, dass** die Feder (28) koaxial zur Bohrung (16) und zum Nocken (25) angeordnet ist.

6. Karabinerhaken nach Anspruch 1, **dadurch gekennzeichnet, dass** sich der Kerbschnitt (30) am Umfangsende des Rings (20) erstreckt und etwas breiter ist als der des Schnappers (22).

7. Karabinerhaken nach Anspruch 1, **dadurch gekennzeichnet, dass** die Länge des Rings (20) der Summe der Längen der Enden (15,18) und des Zwischenraums zwischen diesen entspricht.
